# EUROPÄISCHE PATENTSCHRIFT

(11) **EP 2 486 798 B1**
(45) Veröffentlichungstag und Bekanntmachung des Hinweises auf die Patenterteilung: **04.07.2018**
(21) Anmeldenummer: 12150860.0
(22) Anmeldetag: 12.01.2012
(51) Int. Cl.: A21C 11/16

(54) **Wechseleinsatz für eine Drehdüse**
Changeable insert for a rotating nozzle
Pièce d'insertion interchangeable pour une buse rotative

(30) Priorität: 09.02.2011 DE 102011003878
(43) Veröffentlichungstag der Anmeldung: 15.08.2012
(73) Patentinhaber: Werner & Pfleiderer Industrielle Backtechnik GmbH, 71732 Tamm (DE)
(72) Erfinder: Korbanka, Matthias, 74081 Heilbronn (DE)
(74) Vertreter: Rau, Schneck & Hübner Patentanwälte Rechtsanwälte PartGmbB

(56) Entgegenhaltungen:
- WO-A1-01/10227
- DE-C2- 3 400 897
- DE-T2- 69 427 350
- DE-T2- 69 917 745
- KR-A- 20100 101 770
- RU-C2- 2 164 747
- US-B1- 6 450 796

## Beschreibung

Die Erfindung betrifft eine Drehdüse mit einem Wechseleinsatz.

Drehdüsen werden in Pressvorrichtungen zur Herstellung von Gebäckstangen wie beispielsweise klassische Salzstangen, sogenannte Sticks, eingesetzt. Eine derartige Pressvorrichtung mit einer Drehdüse ist in der EP 1 779 732 A2 offenbart. Derartige Pressvorrichtungen haben eine Mehrzahl nebeneinander liegender Drehdüsen, so dass gleichzeitig eine Mehrzahl von Teigsträngen ausgepresst werden kann, die anschließend weiter zu Gebäckstangen verarbeitet werden. Dazu sind die Drehdüsen an einem Düsenträger vormontiert und in der Pressvorrichtung integriert. Weitere Vorrichtungen zur Verarbeitung teigiger Massen sind bekannt aus RU 2 164 747 C2, DE 694 27 350 T2, WO 01/10227 A1, DE 699 17 745 T2, US 6,450,796 B1, KR 2010 0101770 A, DE 34 00 897 C2. Bei einem Produktwechsel, d.h. bei einer Veränderung des herzustellenden Teigprodukts, müssen die entsprechenden Drehdüsen ausgetauscht werden. Ein derartiger Umrüstvorgang für einen beabsichtigten Produktwechsel ist zeit- und damit kostenintensiv.

Es ist daher eine Aufgabe der vorliegenden Erfindung, einen Umrüstvorgang bei einem Produktwechsel für eine Pressvorrichtung zu vereinfachen sowie eine Drehdüse zur Aufnahme eines Wechseleinsatzes zur Verfügung zu stellen.

Diese Aufgabe ist erfindungsgemäß gelöst durch eine Drehdüse mit einem Wechseleinsatz mit den im Anspruch 1 angegebenen Merkmalen.

Eine Vorrichtung gemäß dem Oberbegriff des Anspruchs 1 ist aus US6450796B1 bekannt.

Ein erfindungsgemäßer Wechseleinsatz für eine Drehdüse ermöglicht es, bei einem geplanten Produktwechsel an einer Pressvorrichtung die Drehdüse in der Pressvorrichtung, insbesondere in einem dafür vorgesehenen Düsenträger, verbaut zu lassen. Für die Durchführung des Produktwechsels ist es durch die Verwendung des Wechseleinsatzes möglich, dass ausschließlich der Wechseleinsatz in der Drehdüse zu tauschen ist. Dadurch ist ein geplanter Produktwechsel weniger aufwändig und deshalb schneller und kostengünstiger durchführbar. Insbesondere ist eine Demontage des Wechseleinsatzes aus der Drehdüse weniger aufwändig als eine Demontage der Drehdüse aus dem Düsenträger. Der Grund hierfür ist u.a., dass die Drehdüsen über einen Getriebekasten drehantreibbar in der Pressvorrichtung angeordnet sind. Die drehantreibbare Anordnung in der Pressvorrichtung der Drehdüsen erfordert eine Zusammenwirkung verschiedener mechanischer Komponenten. Dagegen ist der Wechseleinsatz ausschließlich in der Drehdüse selbst gehalten. Eine Kopplung mit mehreren anderen Komponenten, die zur Demontage des Wechseleinsatzes entkoppelt werden müsste, ist bei dem Wechseleinsatz nicht vorgesehen. Darüber hinaus wird mit dem Wechseleinsatz ein Reinigungsvorgang der Düsen bei einem möglichen Produktwechsel vereinfacht. Zur Reinigung kann der Wechseleinsatz aus der Drehdüse entnommen und gereinigt werden. Die Drehdüse selbst kann während der Reinigung des Wechseleinsatzes in dem Düsenträger in der Pressvorrichtung verweilen. Nach der Reinigung des Wechseleinsatzes kann dieser wieder in die Drehdüse montiert werden. Der Wechseleinsatz weist eine Drehachse, eine Zuführöffnung zum Zuführen von Teig und mindestens eine Abgabeöffnung zum Abgeben des Teigs auf. Ferner sind die Zuführöffnung und die mindestens eine Abgabeöffnung durch einen Teigführungskanal verbunden, so dass während einer Produktion von Gebäckstangen Teig von der Zuführöffnung entlang einer Teigführungsrichtung durch den Teigführungskanal zu der mindestens einen Abgabeöffnung gefördert werden kann.

Durch eine Drehdüse mit einer Wechseleinsatzaufnahme, die zur Aufnahme eines Wechseleinsatzes vorgesehen ist, ist die Verwendung eines Wechseleinsatzes an der Drehdüse ermöglicht. Eine derartige Drehdüse mit einem eingesetzten Wechseleinsatz kann durch einen Tausch des Wechseleinsatzes schnell und unaufwändig umgerüstet werden. Die Reinigung der Drehdüse ist nicht erforderlich. Es genügt die Reinigung des Wechseleinsatzes. Die Drehdüse kann für einen längeren Zeitraum in der Pressvorrichtung an dem Drehdüsenträger montiert bleiben, insbesondere während der gesamten Lebensdauer der Drehdüse. Die Drehdüse kann universell eingesetzt werden, d.h. mit ein und derselben Drehdüse können durch die Verwendung verschiedener Wechseleinsätze verschiedene Gebäckstränge hergestellt werden. Dadurch wird die Anzahl der erforderlichen Vorratsmenge an Drehdüsen bei einem Lebensmittelhersteller reduziert. Dadurch sind die Werkzeugsinvestitions- und die Lagerhaltungskosten für Drehdüsen reduziert. Die Drehdüsen mit der Wechseleinsatzaufnahme weisen gegenüber einer konventionellen Drehdüse mit einer gegebenenfalls aufwändig gestalteten abgabeseitigen Düsenöffnung eine vereinfachte Geometrie auf und sind deshalb unaufwändiger, schneller und kostengünstiger herstellbar.

Die Drehdüse mit einem Befestigungsabschnitt an einer äußeren Mantelfläche des Wechseleinsatzes ermöglicht eine unaufwändige, unkomplizierte und sichere Befestigung des Wechseleinsatzes in einer Drehdüse. In Folge einer derartigen Befestigung ist der Wechseleinsatz sowohl axial entlang der Drehachse als auch tangential gegen ein Verdrehen um die Drehachse in der Drehdüse gehalten.

Die Drehdüse, bei der der Befestigungsabschnitt eine Konusfläche aufweist, ermöglicht über die Konusfläche in einem Befestigungsabschnitt sowohl die axiale Sicherung als auch die Sicherung gegen Verdrehen. Mit einem derartigen Befestigungsabschnitt werden mehrere Sicherungsfunktionen an dem Wechseleinsatz erfüllt. Eine derartige Befestigung des Wechseleinsatzes ist effektiv.

Bei einer Drehdüse nach Anspruch 2 wird der durch den Wechseleinsatz gepresste Teig zusätzlich verdichtet.

Mit einer Drehdüse gemäß Anspruch 3 können Gebäckstangen hergestellt werden, die in Form einer Helix und insbesondere in Form einer Mehrfach-Helix umeinander geschlungen sind.

Bei einer Drehdüse nach Anspruch 4 sind zusätzliche Beanspruchungen des zu verarbeitenden Teiges reduziert. Eine derartige Teigbearbeitung ist schonend.

Bei einer Drehdüse nach Anspruch 5 ist eine abschließende, vor der Teigauspressung erfolgende Kompression des Teiges gewährleistet. Dadurch wird die Qualität des ausgepressten Gebäckstranges zusätzlich verbessert.

Eine Drehdüse nach Anspruch 6 ist fertigungsgerecht gestaltet und ermöglicht eine Herstellung des Einsatzes aus verschiedenen Materialien und mittels verschiedener Verfahren. Darüber hinaus weist ein derartiger Wechseleinsatz eine entlang der Drehachse im Wesentlichen konstante und homogene Stabilität und Festigkeit auf. Eine Wandstärke einer Wandung des Wechseleinsatzes weist bezüglich der Wandstärke an einer Zuführöffnung, d. h. im Anschluss an eine möglicherweise vorgesehene Einführschräge, eine Abweichung von höchstens 30 %, insbesondere von höchstens 20 % und insbesondere von höchstens 10 % auf. An einer Abgabeöffnung des Wechseleinsatzes kann in Abhängigkeit einer gewählten Querschnittsgeometrie der Abgabeöffnung eine größere Abweichung der Wandstärke auftreten.

Eine Drehdüse mit den im Anspruch 7 angegebenen möglichen Querschnittsformen der mindestens einen Abgabeöffnung ermöglicht eine Vielfalt bei der Gestaltung verschiedener Teigprodukte. Dabei ist die Form des Querschnitts der mindestens einen Abgabeöffnung entsprechend einem herzustellenden Produkt ausführbar. Insbesondere sind auch andere als die genannten Querschnittsformen denkbar.

Eine Drehdüse nach Anspruch 8 ist robust, lebensmittelgeeignet und unaufwändig herstellbar.

Eine Drehdüse nach Anspruch 9 ist besonders robust ausgeführt. Dadurch, dass der Wechseleinsatz im Wesentlichen hülsenförmig ausgeführt ist, weist er eine in sich stabile und steife Struktur auf. Der Wechseleinsatz hält einem insbesondere aufgrund des Durchdrückens des Teigs durch die Drehdüse bzw. durch den Wechseleinsatz auftretenden Innendruck stand. Der Wechseleinsatz ist insbesondere stabiler als ein flächenhaft ausgebildetes Lochblech ausgeführt.

Die Vorteile einer Pressvorrichtung nach Anspruch 10 entsprechen den Vorteilen der Drehdüse nach den Ansprüchen 1 bis 9.

Ausführungsbeispiele der Erfindung werden nachfolgend anhand der Zeichnung näher erläutert. In dieser zeigen:
- Fig. 1: schematisch einen Ausschnitt aus einer Anlage zur Herstellung von Gebäckstangen im Bereich einer Pressvorrichtung,
- Fig. 2: eine Draufsicht von insgesamt vier Drehköpfen zum Auspressen jeweils eines Gebäckstrangs sowie eines Trumms eines Endlos-Zugorgans zum Drehantrieb dieser Drehköpfe,
- Fig. 3: eine Ausschnittsvergrößerung aus Fig. 1,
- Fig. 4: eine Ansicht gemäß Pfeil IV in Fig. 1 auf einen an einem Getriebekasten montierten Düsenträger,
- Fig. 5: eine perspektivische Explosionsdarstellung der Pressvorrichtung entsprechend Fig. 4,
- Fig. 6: einen Fig. 1 entsprechenden Ausschnitt einer Anlage zur Herstellung von Gebäckstangen mit einem an der Anlage schwenkbar angelenkten Düsenträger,
- Fig. 7: eine Ausschnittsvergrößerung einer Schnittdarstellung gemäß der Schnittlinie VI-VI in Fig. 4 mit einem in Explosionsdarstellung separat dargestellten Wechseleinsatz gemäß einem ersten Ausführungsbeispiel,
- Fig. 8 bis 11: Ansichten von Abgabeöffnungen von Wechseleinsätzen verschiedener Ausführungsbeispiele.

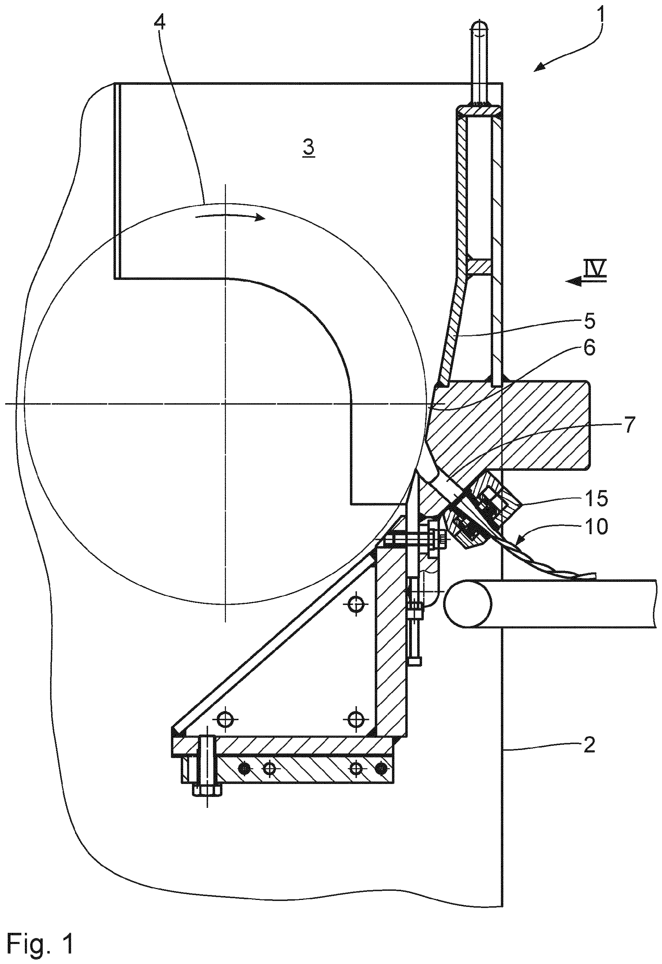

Eine in Fig. 1 schematisch dargestellte Pressvorrichtung 1 ist Teil einer ansonsten nicht dargestellten Anlage zur Herstellung von Gebäckstangen. Auf ein Maschinengehäuse 2 mit einem Maschinenrahmen der Pressvorrichtung 1 ist ein Zuführtrichter aufgesetzt, der in der Zeichnung nicht dargestellt ist, und über den Teig einer Vorratskammer 3 zugeführt wird. Alternativ zu einer Beschickung der Pressvorrichtung 1 über den Zuführtrichter kann auch eine direkte manuelle Beschickung in die Vorratskammer 3 erfolgen.

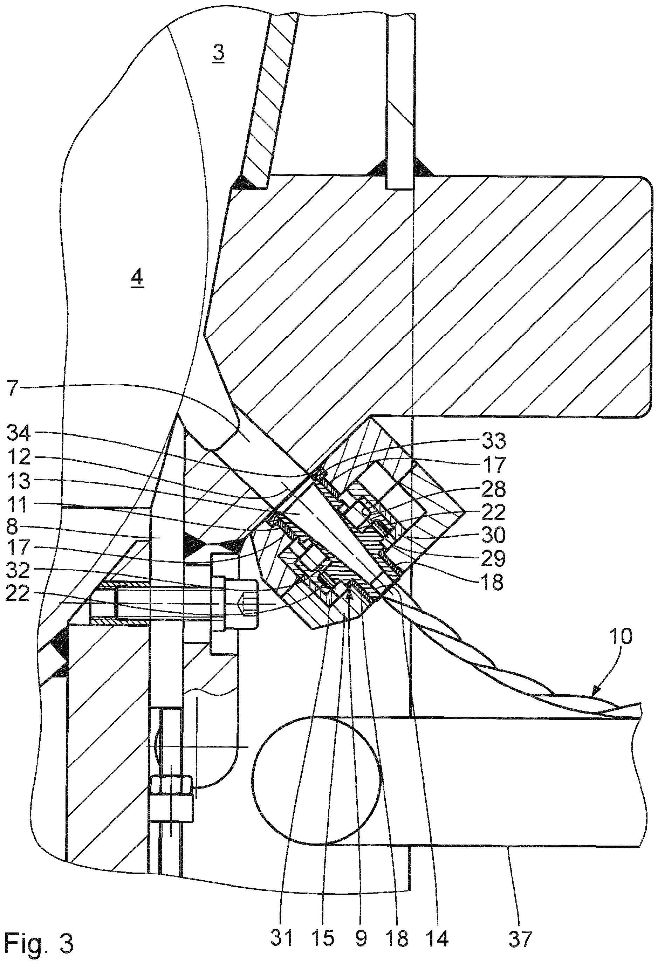

Als Druckerzeugungseinrichtung ist, beiderseits am Maschinenrahmen gelagert, eine Riffelwalze 4 angeordnet, die in Fig. 1 schematisch und insbesondere ohne Riffelung dargestellt ist. Aus der Blickrichtung nach Fig. 1 gesehen dreht sich die Riffelwalze 4 im Uhrzeigersinn. In einem Umfangsbereich, der in Fig. 1 in etwa einem oberen rechten Quadranten entspricht, steht die Riffelwalze 4 mit dem Teig in der Vorratskammer 3 in Förderverbindung. Die Vorratskammer 3 verjüngt sich, in Fig. 1 nach links von der Riffelwalze 4 und nach rechts von einer druckstabilen Wand 5 begrenzt, nach unten. Über eine Engstelle 6 am Ort der stärksten Verjüngung steht die Vorratskammer 3 mit einer Teig-Druckkammer 7 in Verbindung, die sich in den Fig. 1 und 3 von der Riffelwalze 4 aus nach rechts unten erstreckt.

Im Bereich der Teig-Druckkammer 7 steht die Riffelwalze 4 weiterhin mit dem Teig in Förderkontakt. Stromabwärts begrenzt ein stationäres Abstreif-Messer 8, welches der Riffelwalze 4 unter geringstem Spiel benachbart ist, die Teig-Druckkammer 7.

Abgabeseitig steht die Teig-Druckkammer 7 mit einer in den Fig. 1 und 3 dargestellten Drehdüse 9 zum Auspressen eines Gebäckstrangs 10 in Verbindung. Die Drehdüse 9 hat einen Drehkopf 11, der angetrieben um eine Drehachse 12 drehbar ist. Die Drehachse 12 fällt mit einer Rotationssymmetrieachse des Drehkopfs 11 zusammen. Ein mit der Teig-Druckkammer 7 in Verbindung stehender Innenraum 13 der Drehdüse 9 verjüngt sich konisch hin zu einer abgabeseitigen Düsenöffnung 14. Letztere ist konzentrisch zur Drehachse 12 angeordnet.

Der Drehkopf 11 ist als Dreh-Einsatz in einem Düsenträger 15 ausgeführt. Über ein eingangsseitiges erstes Gleitlager 17 und ein die Düsenöffnung 14 umgebendes abgabeseitiges zweites Gleitlager 18 ist der Drehkopf 11 im Düsenträger 15 axial und radial gelagert. Die Gleitlager 17, 18 sind als Gleithülsen ausgeführt. Der Drehkopf 11 kann im Düsenträger 16 auch mittels Wälzlager gelagert sein.

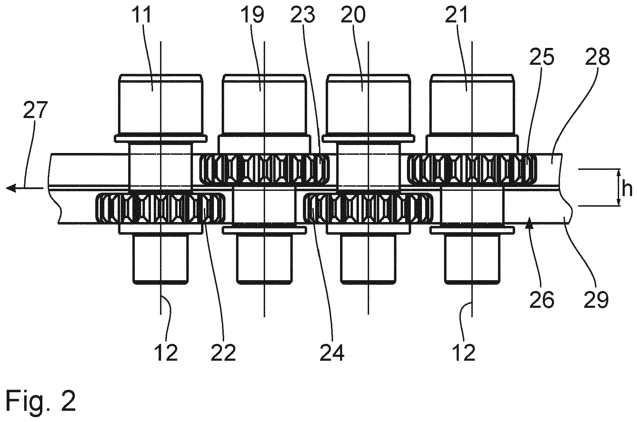

Senkrecht zur Zeichenebene der Fig. 1 und 3 ist eine Mehrzahl von gleich aufgebauten Drehdüsen 9 nebeneinander angeordnet, die vom gemeinsamen Düsenträger 15 aufgenommen sind. Die Seitenansicht der Fig. 2 zeigt neben dem Drehkopf 11 noch weitere Drehköpfe 19 bis 21 dieser Düsen. Bei der Pressvorrichtung 1 sind in der Regel mehr als vier Drehköpfe vorgesehen. Es können zum Beispiel bis zu 40 oder mehr Drehköpfe auf einer Arbeitsbreite senkrecht zur Zeichenebene der Figuren 1 und 3 zwischen 800 mm und 1400 mm vorgesehen sein. Die Drehköpfe 11 sowie 19 bis 21 sind allesamt um zueinander parallele Drehachsen angetrieben drehbar, die in der Zeichnung sämtlich mit der Bezugsziffer 12 bezeichnet werden. Zwei benachbarte Drehachsen sind mit einem Abstand von 25 mm zueinander angeordnet. Es sind auch andere Drehachsenabstände möglich. Insbesondere sind sämtliche Drehköpfe mit gleichem Abstand zueinander entlang der Arbeitsbreite angeordnet.

Ein Drehantrieb für die Drehköpfe 11 sowie 19 bis 21 hat ein über Antriebsritzel 22 bis 25 jedes Drehkopfes 11, 19 bis 21 laufendes und als Riemen 26 bzw. metallische Zahnkette ausgebildetes Endlos-Zugorgan. Der Riemen 26 ist senkrecht zu seinem Laufweg 27 und parallel zur Zeichenebene der Fig. 2 in zwei Zugabschnitte 28, 29 unterteilt, wobei der Zugabschnitt 28 der Eingangsseite der Drehköpfe 11, 19 bis 21 und der Zugabschnitt 29 der Abgabeseite der Drehköpfe 11, 19 bis 21 zugewandt ist. Die Antriebsritzel 22 bis 25 zueinander benachbarter Drehköpfe 11, 19 bis 21 sind um einen Abstand h zueinander höhenversetzt. Bei einer ersten Drehkopf-Gruppe mit den Drehköpfen 11 und 20 sind daher die Antriebsritzel 22, 24 in Fig. 2 nach unten gegenüber den mehr eingangsseitig angeordneten Antriebsritzeln 23, 25 der zweiten Drehkopf-Gruppe mit den Drehköpfen 19, 21 versetzt angeordnet. Der Versatz h entspricht dem Abstand der beiden Zugabschnitte 28, 29 des Riemens 26 zueinander. Der Zugabschnitt 29 läuft über die Antriebsritzel 22, 24 der Drehköpfe 11, 20 der ersten Drehkopf-Gruppe. Der Zugabschnitt 28 läuft über die Antriebsritzel 23, 25 der Drehköpfe 19, 21 der zweiten Drehkopf-Gruppe. Daher ist der Zugabschnitt 29 des Riemens 26 zum Antrieb der ersten Drehkopf-Gruppe und der zweite Zugabschnitt 28 zum Antrieb der zweiten Drehkopf-Gruppe ausgebildet.

Die beiden Zugabschnitte 28, 29 sind auf einer Innenseite des Riemens 26 angeordnet. Außenseitig stützen sich die Zugabschnitte 28, 29 über zwei Gleitschienen 30, 31 gegen den Düsenträger 15 ab. Die beiden Zugabschnitte 28, 29 sind durch einen Führungssteg 32 voneinander getrennt.

Zur Abdichtung der Drehköpfe 11, 19 bis 21 gegen den Düsenträger 16 dient jeweils ein Dichtring 33, der eingangsseitig um den jeweiligen Drehkopf 11, 19 bis 21, benachbart zum Gleitlager 17, in eine Umfangsausnehmung 34 in den Düsenträger 16 eingelegt ist.

Bei der Gebäckstangen-Herstellung wird der Teig durch die Drehdüsen 9 ausgepresst. Dabei werden die Drehköpfe 11, 19 bis 21, angetrieben durch den Riemen 26 und einen nicht dargestellten Motor, in Drehung versetzt. Diese Drehung bewirkt, dass der Gebäckstrang 10, der aus der Düsenöffnung 14 ausgepresst wird, nach den Drehköpfen 11, 19 bis 21 in Form einer Helix verdrillt. Letzterer wird von einem angetriebenen Endlos-Förderband 37 zum Backen weiter transportiert. Neben einem Backofen weist die Anlage zur Herstellung der Gebäckstangen noch eine Abkühl- und Verpackungseinrichtung auf. Die Anlage kann außerdem ein Laugenbad, eine Streueinheit mit einer Streufördereinrichtung und eine Schneideeinheit mit einer Schneide- und Ofenübergabefördereinrichtung aufweisen.

Alle Drehdüsen 9 stehen mit der Teig-Druckkammer 7 in Verbindung. Je nach Anzahl der Drehdüsen 9 kann mit der Pressvorrichtung 1 eine entsprechende Anzahl von Gebäcksträngen 10 gleichzeitig ausgepresst und mit dem Endlos-Förderband 37 weitergefördert werden.

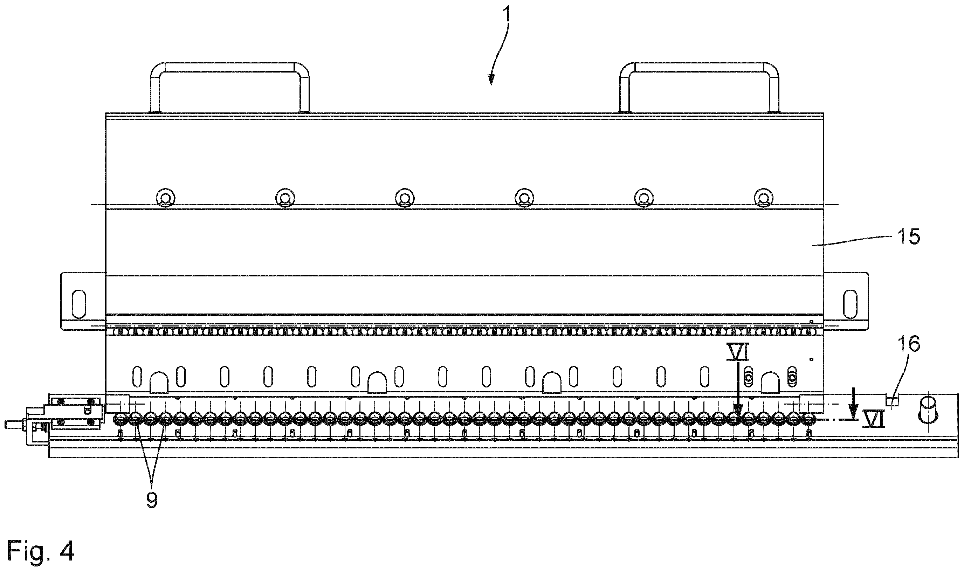

Fig. 4 zeigt eine Vorderansicht der Pressvorrichtung 1 mit einem Getriebekasten 16 und dem Düsenträger 15. An dem Düsenträger 15 sind 47 Drehdüsen 9 drehantreibbar vorgesehen. Ein derartiger Düsenträger 15 weist eine Nutzbreite von 1150 mm auf. Es ist auch möglich, den Düsenträger 15 mit 31 Drehdüsen 9, 39 Drehdüsen 9 oder 55 Drehdüsen 9 auszurüsten. Der Düsenträger 15 weist dann entsprechend eine Nutzbreite von 750 mm, 950 mm bzw. 1350 mm auf. Die Nutzbreite des Düsenträgers 15 ergibt sich aus den zwischen den Drehdüsen 9 angeordneten Zwischenräumen und der Breite der Zwischenräume, die gemäß dem gezeigten Ausführungsbeispiel konstant bei 25 mm liegt. Es ist denkbar, andere als die genannten Drehdüsenzahlen an einem Düsenträger 15 vorzusehen.

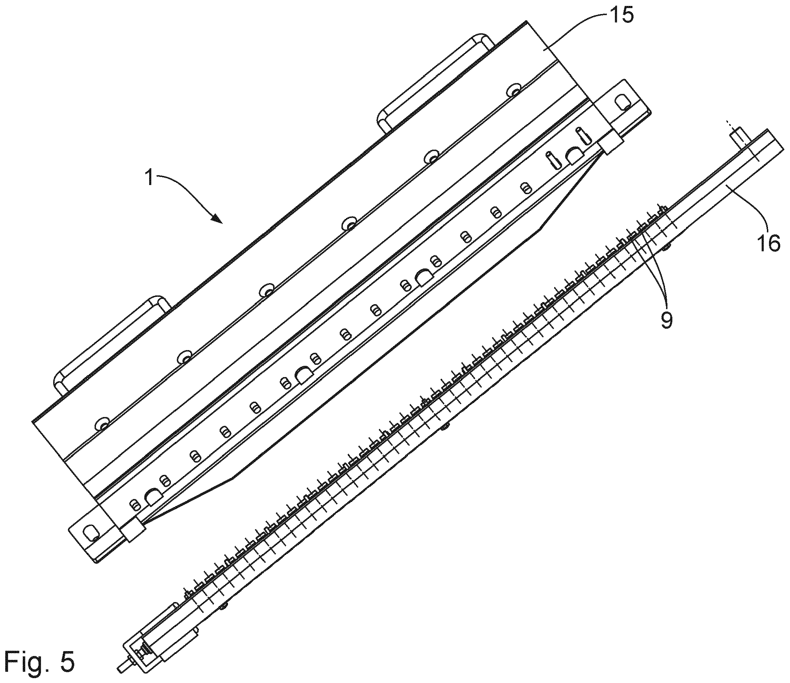

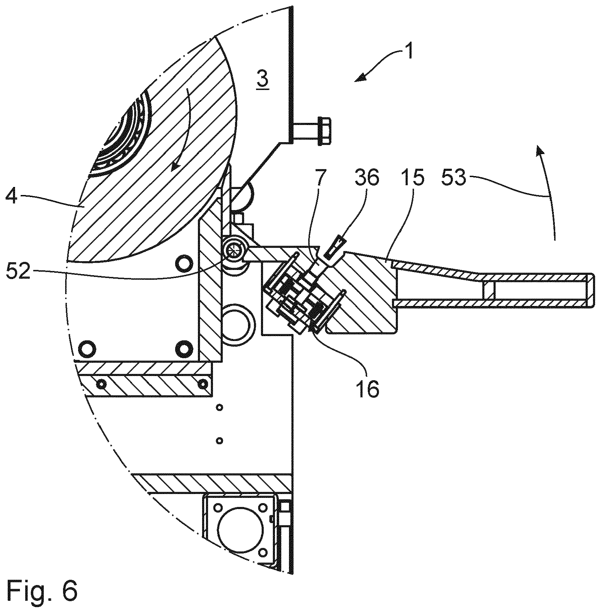

Fig. 5 zeigt die Pressvorrichtung 1 gemäß Fig. 4, wobei der Düsenträger 15 von dem Getriebekasten 16 demontiert ist. Um einen in der Drehdüse 9 angeordneten Wechseleinsatz 36 zu montieren bzw. zu demontieren, zu reinigen und/oder zu tauschen, wird der Getriebekasten 16 zusammen mit dem Düsenträger 15 von der Pressvorrichtung 1, die als Stickpresse ausgeführt ist, um eine parallel zur Drehachse der Riffelwalze 4 angeordnete Schwenkachse 52 verschwenkt. Es ist nicht erforderlich, den Getriebekasten 16 vom Düsenträger 15 zu demontieren, um eine Zugänglichkeit der Wechseleinsätze 36 zu ermöglichen. In einer von der Pressvorrichtung 1 wegverschwenkten Anordnung des Getriebekastens 16 mit dem Düsenträger 15 können die Wechseleinsätze 36 ausgetauscht werden. Dadurch ist die Zugänglichkeit der Wechseleinsätze vereinfacht. Insbesondere ist der Zugang zu den Wechseleinsätzen 36 schneller möglich. Damit ist es möglich, einen Formatwechsel eines herzustellenden Gebäckprodukts schneller umzusetzen. Rüstzeiten sind reduziert. Fig. 6 zeigt die Pressvorrichtung 1 mit dem um eine Schwenkachse 52 schwenkbar angelenkten Düsenträger 15, an dem Getriebekasten 16 montiert ist. In Fig. 6 ist der Düsenträger 15 in einer verschwenkten Anordnung dargestellt. In dieser Anordnung ist es möglich, die Wechseleinsätze 36 aus dem Getriebekasten 16 zu entnehmen. Ausgehend von dieser Wartungs- und Wechselanordnung des Düsenträgers 15 kann dieser entlang einer Schwenkrichtung 53 um die Schwenkachse 52 in eine Arbeitsanordnung verschwenkt werden. Die Schwenkbewegung erfolgt in der Schwenkrichtung 53 bezüglich der Schwenkachse um etwa 90°. In der Arbeitsanordnung ist der Düsenträger 15 im Wesentlichen vertikal entsprechend der Darstellung in Fig. 1 angeordnet. Die Teig-Druckkammer 7 ist dann mit der Vorratskammer 3 verbunden.

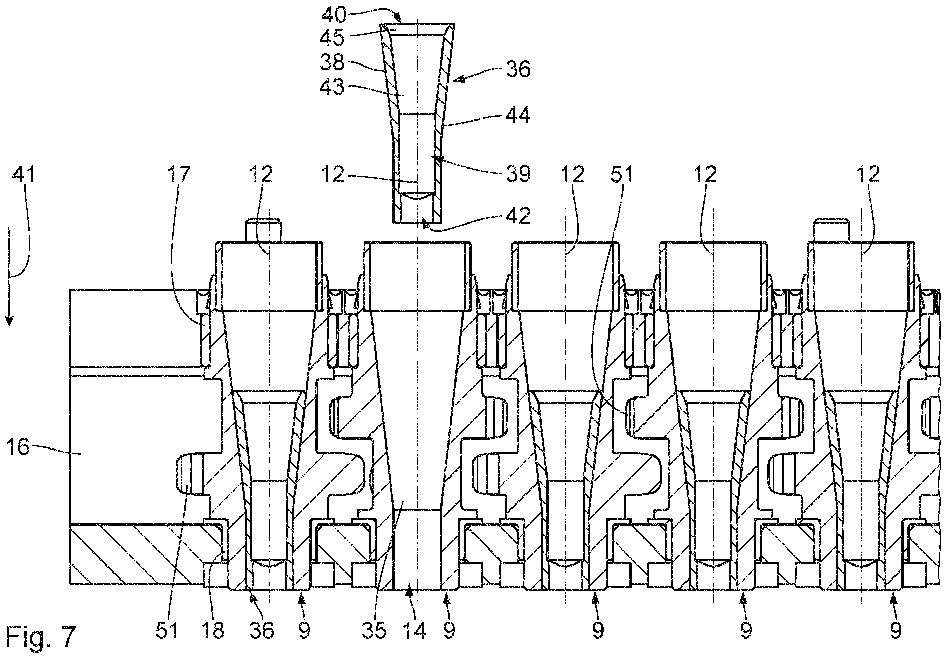

Fig. 7 zeigt eine vergrößerte Schnittdarstellung des Getriebekastens 16 mit mehreren drehbar um ihre jeweilige Drehachse 12 angeordnete Drehdüsen 9. Bezüglich der jeweiligen Drehachse 12 ist eine Außenverzahnung 51 benachbarter Drehdüsen 9 versetzt angeordnet. Die versetzte Anordnung der Drehdüsen 9 erfolgt derart, dass jeweils die übernächste Drehdüse 9 identisch ausgeführt ist. Die versetzte Anordnung der Drehdüsen 9 erfolgt also wechselweise. Eine derartige Anordnung der Drehdüsen 9 ist kompakt und dient dem Antrieb für den Zugstrang. Die Düsen 9 haben identische Innenkonturen und weisen eine Wechseleinsatzaufnahme 35 auf, die im Bereich der Düsenöffnung 14 innerhalb der Drehdüse 9 angeordnet ist. Die Wechseleinsatzaufnahme 35 weist eine konisch ausgeführte Innenkontur auf. In die Drehdüse 9 wird entlang der Drehachse 12 der Wechseleinsatz 36 eingesetzt.

Der Wechseleinsatz 36 weist einen Befestigungsabschnitt 38 mit einer Konusfläche an einer Außenkontur auf. Die Außenkontur des Wechseleinsatzes 36 umgibt einen Teigführungskanal 39, der eine Zuführöffnung 40 entlang einer Teigführungsrichtung 41 mit einer Abgabeöffnung 42 verbindet. Die Zuführöffnung 40 dient dem Zuführen von Teig in den Wechseleinsatz 36. Entsprechend dient die Abgabeöffnung 42 zum Abgeben des durch den Wechseleinsatz 36 gepressten Teigs. Bei dem in der Drehdüse 9 montierten Wechseleinsatz 36 sind die Düsenöffnung 14 und die Abgabeöffnung 42 benachbart zueinander und insbesondere konzentrisch zur Drehachse 12 angeordnet. Der Wechseleinsatz 36 ist im Wesentlichen hülsenförmig ausgeführt und ist als Einsteckhülse in die Drehdüse 9 einsteckbar. Senkrecht zur Drehachse 12 weist der Wechseleinsatz 36 eine im Wesentlichen ringförmige Querschnittsfläche auf, wobei die Innenkontur der Querschnittsfläche insbesondere im Bereich der Abgabeöffnung 42 unrund ausgeführt sein kann. Im Bereich der Abgabeöffnung 42 ist die Querschnittsfläche des Wechselseinsatzes 36 abhängig von einem herzustellenden Produkt. Entlang der Drehachse 12 kann die Querschnittsfläche veränderlich sein, d.h. Größe und/oder Form von Außen- und/oder Innenkontur.

Der Wechseleinsatz 36 ist durch den Befestigungsabschnitt 38 in der Wechseleinsatzaufnahme 35 der Drehdüse 9 sicher gehalten. Aufgrund der Konusfläche des Befestigungsabschnitts 38 ist der Wechseleinsatz 36 axial, d.h. entlang der Teigführungsrichtung 41, sicher in der Drehdüse 9 gehalten. Ein axiales Verrutschen in Folge einer Presskraft ist dadurch verhindert. Darüber hinaus ist der Wechseleinsatz 36 durch die im Bereich des Befestigungsabschnitts 38 wirkende Reibkraft zwischen dem Wechseleinsatz 36 und der Wechseleinsatzaufnahme 35 der Drehdüse 9 gegen ein Verdrehen um die Drehachse 12 gesichert. Der Wechseleinsatz 36 weist entlang der Drehachse 12 eine im Wesentlichen konstante Wandstärke einer Wandung 44 auf.

Die Abgabeöffnung 42 weist einen senkrecht zur Drehachse 12 orientierten Querschnitt auf, der gegenüber einem entsprechenden senkrecht zur Drehachse 12 orientierten Querschnitt der Zuführöffnung 40 reduziert ist. Entsprechend wird ein durch den Wechseleinsatz 36 gepresster Teig entlang der Teigführungsrichtung 41 komprimiert. Der Teigführungskanal 39 ist im Wesentlichen parallel zur Drehachse 12 orientiert und weist einen Verdichtungsabschnitt 43 auf. In dem Verdichtungsabschnitt 43 reduziert sich ein senkrecht zur Drehachse 12 orientierter Querschnitt des Teigführungskanals 39 entlang der Teigführungsrichtung 41.

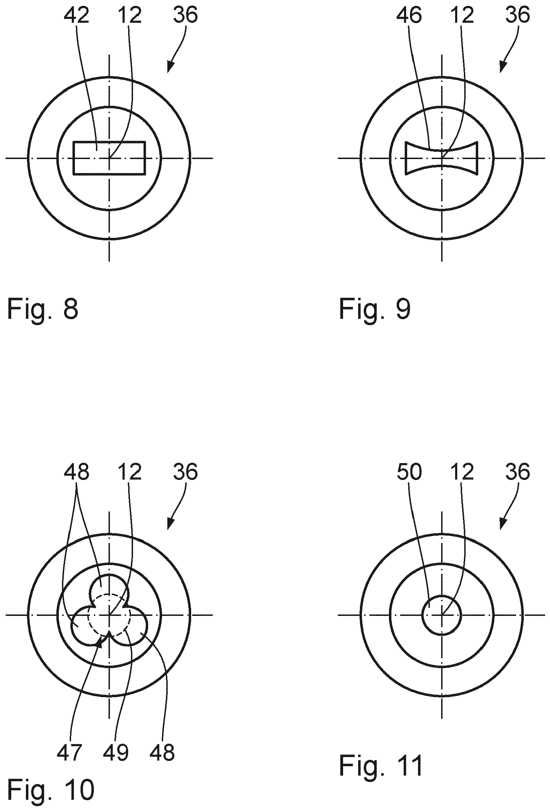

Der Wechseleinsatz gemäß dem gezeigten Ausführungsbeispiel in den Fig. 7 und 8 weist genau eine Abgabeöffnung 42 auf. Es ist auch möglich, dass der Wechseleinsatz 36 bei einem entsprechend zu gestaltenden Gebäckstrang mehrere Abgabeöffnungen 42 aufweist. Dabei können die Abgabeöffnungen 42 konzentrisch oder in einer anderen Weise bezüglich der Drehachse 12 angeordnet sein. Bei mehreren Abgabeöffnungen ist es möglich, einen Gebäckstrang in Form einer Mehrfach-Helix herzustellen.

Gemäß dem in den Fig. 7 und 8 gezeigten ersten Ausführungsbeispiel des Wechseleinsatzes 36 ist die Zuführöffnung 40 kreisförmig ausgeführt und weist eine Einführschräge 45 auf. Im Bereich der Abgabeöffnung 42 weist der Wechseleinsatz 36 einen senkrecht zur Drehachse 12 orientierten rechteckigen Querschnitt auf. Der Wechseleinsatz 36 ist aus Polytetrafluorethylen (PTFE), das auch unter dem Handelsnamen Teflon bekannt ist, ausgeführt. Es ist auch möglich, den Wechseleinsatz 36 aus Metall und insbesondere aus rostfreiem Stahl oder anderen Kunststoffen herzustellen.

Wie insbesondere aus Fig. 7 deutlich wird, ist es bei einem bevorstehenden Produktwechsel der herzustellenden Gebäckstränge nicht erforderlich, die Drehdüse 9 von dem Getriebekasten 15 zu demontieren. Eine derartige Demontage der Drehdüsen 9 wäre aufwändig. Vielmehr ist es ausreichend, den Wechseleinsatz 36 aus der Wechseleinsatzaufnahme 35 der Drehdüse 9 zu demontieren. Dazu kann ein Demontagewerkzeug in Form eines Dorns dienen, der einen geringfügig kleineren Außendurchmesser als die Abgabeöffnung 42 aufweist. Mit Hilfe des Dorns kann der Wechseleinsatz 36 entgegen der Teigführungsrichtung 41 aus der Drehdüse 9 entfernt werden.

Die Drehdüse 9 ist aus rostfreiem Stahl hergestellt. Durch die Verwendung von Wechseleinsätzen 36 mit verschieden geformten Abgabeöffnungen 42 ist es möglich, mehrere verschiedene Gebäckstränge mit identischen Drehdüsen 9 herzustellen.

Der rechteckförmige Querschnitt der Abgabeöffnung 42 ist in Fig. 8 dargestellt. Dabei weist der rechteckige Querschnitt ein Verhältnis von Länge zu Breite von etwa 2:1 auf. Das Verhältnis kann auch größer oder kleiner als 2:1 sein. Es ist auch möglich, den Querschnitt der Abgabeöffnung 42 dreieckig, fünfeckig oder in Form eines anderen Polygons zu gestalten.

Fig. 9 zeigt eine weitere Ausführung des Wechseleinsatzes 36. Komponenten, die denjenigen entsprechen, die vorstehend schon unter Bezugnahme auf die Fig. 1 bis 8 erläutert wurden, tragen die gleichen Bezugsziffern und werden nicht nochmals im Einzelnen diskutiert.

Der Querschnitt der Abgabeöffnung 46 des Wechseleinsatzes 36 weist eine taillierte Rechtecksform auf. Das bedeutet, dass die Abgabeöffnung 46 im Wesentlichen rechteckförmig, ähnlich der Abgabeöffnung 42 des ersten Ausführungsbeispiels, gestaltet ist. An den längeren, gemäß Fig. 8 oben und unten dargestellten Seitenlinien der Abgabeöffnung 46 ist ein Radius derart vorgesehen, dass die Abgabeöffnung 46 konkav ausgeführt ist. Die Abgabeöffnung 46 weist in einem mittleren Bereich der längeren Seitenlinien eine reduzierte Breite auf. Insbesondere ist die Breite der Abgabeöffnung 46 an der Drehachse 12 minimal. Die von den Radien gebildeten Kreisbogenabschnitte sind einander entgegengesetzt angeordnet. Die Abgabeöffnung 46 ist doppelt symmetrisch ausgeführt.

Fig. 10 zeigt eine weitere Ausführung eines Wechseleinsatzes 36. Komponenten, die denjenigen entsprechen, die vorstehend schon unter Bezugnahme auf die Fig. 1 bis 9 erläutert wurden, tragen die gleichen Bezugsziffern und werden nicht nochmals im Einzelnen diskutiert.

Der Wechseleinsatz 36 weist eine Abgabeöffnung 47 auf. Die Abgabeöffnung 47 umfasst drei einander zumindest teilweise überlappende Bohrungen 48, die parallel zur Drehachse 12 angeordnet sind. Jede der Bohrungen 48 weist einen Durchmesser von 3 mm auf. Die Bohrungen 48 sind auf einem Lochkreis mit dem Durchmesser von 3,3 mm in einem Winkelabstand von 120° bezogen auf die Drehachse 12 angeordnet, d.h. die Mittelpunkte der Bohrungen 48 sind auf dem Lochkreis um die Drehachse 12 gleich beabstandet angeordnet. Es ist auch möglich, die Abgabeöffnung 47 mit mehreren oder weniger als drei Bohrungen 48 auszuführen. Entsprechend kann auch der Durchmesser des Lochkreises bzw. können die Durchmesser der Bohrungen 48 variiert werden.

Fig. 11 zeigt eine weitere Ausführung des Wechseleinsatzes 36. Komponenten, die denjenigen entsprechen, die vorstehend schon unter Bezugnahme auf die Fig. 1 bis 10 erläutert wurden, tragen die gleichen Bezugsziffern und werden nicht nochmals im Einzelnen diskutiert.

Ein Wechseleinsatz 36 weist eine Abgabeöffnung 50 auf, die als kreisförmige Bohrung konzentrisch zur Drehachse 12 ausgeführt ist. Eine derartige Abgabeöffnung 50 ist unkompliziert und schnell herstellbar.

## Patentansprüche

1. Drehdüse für eine Pressvorrichtung, wobei die Drehdüse einen Wechseleinsatz (36) aufweist mit
a. einer Drehachse (12),
b. einer Zuführöffnung (40) zum Zuführen von Teig,
c. mindestens einer Abgabeöffnung (42; 46; 47; 50) zum Abgeben des Teigs und
d. einem die Zuführöffnung (40) und die mindestens eine Abgabeöffnung (42; 46; 47; 50) verbindenden Teigführungskanal (39),
wobei die Drehdüse (9) eine Wechseleinsatzaufnahme (35) mit einer Innenkontur aufweist, die mit einer Außenkontur des Wechseleinsatzes (36) korrespondiert,
wobei ein Befestigungsabschnitt (38) an einer äußeren Mantelfläche des Wechseleinsatzes (36) zur Befestigung in der Drehdüse (9) vorgesehen ist,
wobei der Befestigungsabschnitt (38) eine Konusfläche aufweist,
wobei der Wechseleinsatz (36) entlang einer Teigführungsrichtung (41) axial sicher in der Drehdüse (9) gehalten ist,
**dadurch gekennzeichnet,**
**dass** der Wechseleinsatz (36) ausschließlich in der Drehdüse (9) selbst gehalten ist.

2. Drehdüse nach Anspruch 1, **dadurch gekennzeichnet, dass** die Abgabeöffnung (42; 46; 47; 50) einen Querschnitt senkrecht zur Drehachse (12) aufweist, der kleiner ist als ein senkrecht zur Drehachse (12) orientierter Querschnitt der Zuführöffnung (40).

3. Drehdüse nach einem der vorstehenden Ansprüche, **dadurch gekennzeichnet, dass** die mindestens eine Abgabeöffnung (42; 46; 47; 50) konzentrisch zur Drehachse (12) angeordnet ist.

4. Drehdüse nach einem der vorstehenden Ansprüche, **dadurch gekennzeichnet, dass** der Teigführungskanal (39) im Wesentlichen parallel zur Drehachse (12) angeordnet ist.

5. Drehdüse nach einem der vorstehenden Ansprüche, **dadurch gekennzeichnet, dass** der Teigführungskanal (40) einen Verdichtungsabschnitt (43) aufweist, in dem ein senkrecht zur Drehachse (12) orientierter Querschnitt des Teigführungskanals (40) sich entlang der Teigführungsrichtung (41) reduziert.

6. Drehdüse nach einem der vorstehenden Ansprüche, **gekennzeichnet durch** eine entlang der Drehachse (12) im Wesentlichen konstante Wandstärke einer Wandung (40) des Wechseleinsatzes (36).

7. Drehdüse nach einem der vorstehenden Ansprüche, **dadurch gekennzeichnet, dass** die mindestens eine Abgabeöffnung (42; 46; 47; 50) einen Querschnitt senkrecht zur Drehachse (12) aufweist, der kreisförmig, rechteckig, tailliert rechteckig oder in Form mehrerer, insbesondere drei, überlappender Kreisquerschnitte ausgeführt ist.

8. Drehdüse nach einem der vorstehenden Ansprüche, **dadurch gekennzeichnet, dass** der Wechseleinsatz (36) Kunststoff, insbesondere Polytetrafluorethylen, oder Metall, insbesondere rostfreien Stahl, aufweist.

9. Drehdüse nach einem der vorstehenden Ansprüche, **dadurch gekennzeichnet, dass** der Wechseleinsatz (36) im Wesentlichen hülsenförmig ausgeführt ist.

10. Pressvorrichtung mit
a. einer Vorratskammer (3) für Teig,
b. einer Druckerzeugungseinrichtung (4) zur Erzeugung von Druck in einer Teig-Druckkammer (7), die mit der Vorratskammer (3) in Verbindung steht, und
c. mindestens einer Drehdüse (9) nach einem der vorstehenden Ansprüche zum Auspressen jeweils eines Gebäckstranges (10), die eingangsseitig mit der Teig-Druckkammer (7) in Verbindung stehen.

## Claims

1. Rotary nozzle for a pressing device, the rotary nozzle comprising an interchangeable insert (36) with,
a. an axis of rotation (12)
b. a feed opening (40) for feeding dough,
c. at least one discharge opening (42; 46; 47; 50) for discharging the dough, and
d. a dough guide channel (39) connecting the feed opening (40) to the at least one discharge opening (42; 46; 47; 50),
wherein the rotary nozzle (9) comprises a interchangeable insert receptacle (35) with an inner contour that corresponds to an outer contour of the interchangeable insert (36),
wherein a fastening portion (38) is provided on an outer circumferential surface of the interchangeable insert (36) for attachment in the rotary nozzle (9),
wherein the fastening portion (38) has a conical surface,
wherein the interchangeable insert (36) is axially secured in the rotary nozzle (9) along a dough guide direction (41).

2. Rotary nozzle according to claim 1, **characterized in that** the discharge opening (42; 46; 47; 50) has a cross section perpendicular to the axis of rotation (12) which is smaller than a cross section of the feed opening (40) oriented perpendicular to the axis of rotation (12).

3. Rotary nozzle according to any one of the preceding claims, **characterized in that** the at least one discharge opening (42; 46; 47; 50) is arranged concentrically to the axis of rotation (12).

4. Rotary nozzle according to any one of the preceding claims, **characterized in that** the dough guide channel (39) is arranged substantially parallel to the axis of rotation (12).

5. Rotary nozzle according to any one of the preceding claims, **characterized in that** the dough guide channel (40) has a compression section (43) in which a cross section of the dough guide channel (40) oriented perpendicular to the axis of rotation (12) is reduced along the dough guide direction (41).

6. Rotary nozzle according to any one of the preceding claims, **characterized by** a substantially constant wall thickness of a wall (40) of the interchangeable insert (36) along the axis of rotation (12).

7. Rotary nozzle according to any one of the preceding claims, **characterized in that** the at least one discharge opening (42; 46; 47; 50) has a cross section perpendicular to the axis of rotation (12) which is circular, rectangular, concave rectangular, or in the form of several, in particular three, overlapping circular cross sections.

8. Rotary nozzle according to any one of the preceding claims, **characterized in that** the interchangeable insert (36) comprises plastics, in particular polytetrafluoroethylene, or metal, in particular stainless steel.

9. Rotary nozzle according to any one of the preceding claims, **characterized in that** the interchangeable insert (36) is designed substantially in the shape of a sleeve.

10. Pressing device with
a. a storage chamber (3) for dough,
b. pressure generating means (4) for generating pressure in a dough pressure chamber (7) communicating with the supply chamber (3), and
c. at least one rotary nozzle (9) according to any one of the preceding claims for pressing out a respective pastry strand (10), the rotary nozzles (9) communicating with the input side of the dough pressure chamber (7).

## Revendications

1. Buse rotative pour un dispositif de pressage, la buse rotative comprenant un insert interchangeable (36), la buse étant pourvue
a. d'un axe de rotation (12),
b. d'une ouverture d'alimentation (40) pour l'alimentation en pâte,
c. d'au moins une ouverture de distribution (42 ; 46 ; 47 ; 50) pour la distribution de la pâte et
d. d'un canal de guidage de pâte (39) reliant l'ouverture d'alimentation (40) et l'ouverture ou les ouvertures de distribution (42 ; 46 ; 47 ; 50),
la buse rotative (9) comprenant un logement d'insert interchangeable (35) présentant un contour intérieur qui correspond au contour extérieur de l'insert interchangeable (36),
une partie de fixation (38) sur une surface extérieure de l'insert interchangeable (36) destinée à être fixée dans la buse rotative (9),
la partie de fixation (38) présentant une surface conique,
l'insert interchangeable (36) étant retenu dans la buse rotative (9) avec blocage axial le long d'une direction de guidage de pâte (41),
**caractérisée en ce que**
l'insert interchangeable (36) est retenu exclusivement dans la buse rotative (9) elle-même.

2. Buse rotative selon la revendication 1, **caractérisée en ce que** l'ouverture de distribution (42 ; 46 ; 47 ; 50) présente une section transversale perpendiculaire à l'axe de rotation (12) qui est inférieure à une section transversale de l'ouverture d'alimentation (40), laquelle section est orientée perpendiculairement à l'axe de rotation (12).

3. Buse rotative selon l'une quelconque des revendications précédentes, **caractérisée en ce que** l'ouverture ou les ouvertures de distribution (42 ; 46 ; 47 ; 50) sont situées de manière concentrique par rapport à l'axe de rotation (12).

4. Buse rotative selon l'une quelconque des revendications précédentes, **caractérisée en ce que** le canal de guidage de pâte (39) est agencé sensiblement parallèlement à l'axe de rotation (12).

5. Buse rotative selon l'une quelconque des revendications précédentes, **caractérisée en ce que** le canal de guidage de pâte (40) présente une partie d'étanchéité (43) dans laquelle une section transversale du canal de guidage de pâte (40) orientée perpendiculairement à l'axe de rotation (12) est réduite le long de la direction de guidage de pâte (41).

6. Buse rotative selon l'une quelconque des revendications précédentes, **caractérisée par** une épaisseur de paroi d'une paroi (40) de l'insert interchangeable (36) sensiblement constante le long de l'axe de rotation (12).

7. Buse rotative selon l'une quelconque des revendications précédentes, **caractérisée en ce que** l'ouverture ou les ouvertures de distribution (42 ; 46 ; 47 ; 50) présentent une section transversale perpendiculaire à l'axe de rotation (12) qui est circulaire, rectangulaire, taillée de manière rectangulaire ou qui présente la forme de plusieurs, en particulier trois sections transversales circulaires se chevauchant.

8. Buse rotative selon l'une quelconque des revendications précédentes, **caractérisée en ce que** l'insert interchangeable (36) comprend une matière plastique, en particulier du polytétrafluoréthylène, ou un métal, en particulier de l'acier inoxydable.

9. Buse rotative selon l'une quelconque des revendications précédentes, **caractérisée en ce que** l'insert interchangeable (36) est réalisé sensiblement en forme de manchon.

10. Dispositif de pressage comprenant
a. une chambre de stockage (3) pour la pâte,
b. un dispositif de génération de pression (4) destiné à générer de la pression dans une chambre de pression pour la pâte (7), qui est reliée à la chambre de réserve (3), et
c. au moins une buse rotative (9) selon l'une quelconque des revendications précédentes qui est destinée à exprimer un boudin de pâtisserie (10) et qui est reliée côté entrée à la chambre de pression pour la pâte (7).
